# EUROPEAN PATENT APPLICATION

(11) **EP 3 860 062 A1**
(43) Date of publication of application: **04.08.2021**
(21) Application number: 20829297.9
(22) Date of filing: 12.02.2020
(51) Int. Cl.: H04L 12/803

(54) **MESSAGE PROCESSING METHOD, PROCESSING UNIT, AND A VIRTUAL PRIVATE NETWORK SERVER**

(30) Priority: 19.12.2019 CN 201911315330
(71) Applicant: Xiamen Wangsu Co., Ltd., Xiamen, Fujian 361003 (CN)
(72) Inventor: LI, Qiangda, Xiamen, Fujian 361003 (CN); CAO, Zhiwen, Xiamen, Fujian 361003 (CN)
(74) Representative: Würmser, Julian
(86) International application number: PCT/CN2020/074953
(87) International publication number: WO 2021/120374

(57) **Abstract**

Embodiments of the present disclosure relate to the field of network communication technology and disclose a datagram processing method, processing unit and VPN server. The present disclosure is applicable to a VPN server. The VPN server includes a packet receiving thread, a plurality of processing threads and a packet sending thread. The method includes: the packet receiving thread receives datagrams and distributes the datagrams to the plurality of processing threads successively in a preset order (101); the plurality of processing threads carry out parallel processing on the datagrams after receiving the datagrams (102); the packet sending thread acquires the processed datagrams from the plurality of processing threads successively in a preset order (103). The efficiency of datagram transmission may be improved on the basis of ensuring the datagram transmission sequence.

## Description

### CROSS REFERENCE TO RELATED APPLICATIONS

The present disclosure refers to Chinese Patent Application No. 201911315330.9, entitled "DATAGRAM PROCESSING METHOD, PROCESSING UNIT AND VPN SERVER" filed on December 19, 2019, which is incorporated into the present disclosure by reference in its entirety.

### TECHNICAL FIELD

Embodiments of the present disclosure relate to the field of network communication technology and particularly to a datagram processing method, processing unit and VPN server.

### BACKGROUND

With the rapid development of network, more and more government and enterprise institutions start to use public network to deal with work and affairs. To ensure the security of internal data of government and enterprise institutions, Virtual Private Network (VPN) technology has become a way for user equipment to access internal data from external network. VPN technology can establish a private network on public network. When users need to call internal data of government and enterprise institutions, they send requests to the VPN server of the private network established on the public network for remote access.

When receiving users' requests, a VPN server needs to process request data packets sent by the users and then forward the request data packets to the internal network of the government and enterprise institutions. Besides, when acquiring the internal data from the internal network of the government and enterprise institutions, it is necessary for the VPN server to conduct certain processing before returning to the user terminal. When there are a large number of request data packets sent by users or a large number of internal data packets returned by government and enterprise institutions, the VPN server needs to queue the received multiple packets, and the processing thread processes each data packet in sequence until all data packets are processed, and then forwards the processed data packets, thereby realizing the processing and transmission of the received data packets.

The inventor found that at least the following problems existed in related technologies: when each VPN data packet is forwarded, the rest of the data packets are waiting; if there are a large number of data packets to be processed, it will take a long time to process the large number of data packets, thus leading to a high delay in the transmission process of data and affecting the user experience because users cannot get the required data in time.

### SUMMARY

Embodiments of the present disclosure are intended to provide a datagram processing method, a processing unit and a VPN server, so that the efficiency of datagram transmission may be improved on the basis of ensuring the datagram transmission sequence.

In order to solve the above technical problems, embodiments of the present disclosure provide a datagram processing method which is applicable to a VPN server. The VPN server includes a packet receiving thread, a plurality of processing threads and a packet sending thread. The method includes: receiving, by the packet receiving thread, datagrams; and distributing, by the packet receiving thread, the datagrams to the plurality of processing threads successively in a preset order; carrying out, by the plurality of processing threads, parallel processing on the datagrams after receiving the datagrams; acquiring, by the packet sending thread, the processed datagrams, from the plurality of processing threads successively in the preset order.

Embodiments of the present disclosure further provide a datagram processing unit, including: a receiving module configured to receive datagrams; a distribution module configured to distribute datagrams to the plurality of processing modules successively in a preset order; a plurality of processing modules configured to carry out parallel processing on the datagrams after receiving the datagrams; and an acquisition module configured to acquire the processed datagrams from the plurality of processing modules successively in the preset order.

Embodiments of the present disclosure further provide a VPN server, including: a plurality of the aforementioned datagram processing units.

Embodiments of the present disclosure further provide a VPN server, including: at least one processor; and a memory in communication with the at least one processor. The memory stores instructions executable by the at least one processor, and the instructions, when be executed by at least one processor, cause the at least one processor to implement the aforementioned datagram processing method.

Embodiments of the present disclosure further provide a storage medium that stores a computer program; when the computer program is executed by a processor, the aforementioned datagram processing method is implemented.

Compared with the existing technology, embodiments of the present disclosure provide a VPN server including a packet receiving thread, a plurality of processing threads and a packet sending thread. The packet receiving thread in the server receives datagrams and distributes the datagrams to the plurality of processing threads successively in the preset order; after the processing thread processes the received datagrams, the packet sending thread acquires the processed datagrams from the plurality of processing threads in the same preset order, thus ensuring the sequence of the processed datagrams is consistent with that of the datagrams received by the packet receiving thread and avoiding the problem of datagram disorder. Furthermore, when receiving the datagrams, the plurality of processing threads may carry out parallel processing on the received datagrams, thus improving the datagram processing efficiency, shortening the datagram processing time, and enhancing the efficiency of datagram transmission.

Furthermore, distributing, by the packet receiving thread, the datagrams to the plurality of processing threads successively in a preset order includes: distributing, by the packet receiving thread, the datagrams to preset first datagram queues corresponding to the plurality of processing threads successively in the preset order. Carrying out, by the plurality of processing threads, parallel processing on the datagrams after receiving the datagrams includes: acquiring, by the plurality of processing threads, datagrams from the corresponding preset first datagram queues, respectively, and carrying out, by the plurality of processing threads, parallel processing on the datagrams, and storing, by the plurality of processing threads, the processed datagrams in the corresponding preset second datagram queues, respectively. Acquiring, by the packet sending thread, the processed datagrams from the plurality of processing threads successively in the preset order includes: acquiring, by the packet sending thread, the processed datagrams from the preset second datagram queues corresponding to the plurality of processing threads successively in the preset order. By establishing the first datagram queues between the packet receiving thread and the plurality of processing threads, and using the first datagram queues to store the datagrams to be distributed to the plurality of processing threads, the distribution efficiency of the packet receiving thread to distribute the datagrams to the plurality of processing threads can be improved, and the datagrams in the first datagram queues are queued in the order of distribution, avoiding disorder of the datagrams. Similarly, by establishing the second datagram queues between the packet sending thread and the plurality of processing threads, and using the second datagram queues to temporarily store the processed datagrams by the plurality of processing threads, the plurality of processing threads are prevented from being occupied by the processed datagrams, and the processing efficiency of the plurality of processing threads is improved.

Furthermore, before distributing, by the packet receiving thread, the datagrams to the preset first datagram queues corresponding to the plurality of processing threads successively in the preset order, the method further includes: determining that the number of datagrams in the preset first datagram queues to which the datagrams are to be distributed by the packet receiving thread does not reach the maximum storage number of the preset first datagram queues. When the number of datagrams in the preset first datagram queues reaches the maximum storage number, the datagrams to be distributed may be discarded, and the new datagrams received may continue to be distributed to the preset first datagram queues until the distributed datagrams may be received by the preset first datagram queues; or when the maximum storage number is reached, the packet receiving thread may also send enqueueing requests for multiple times to the preset first datagram queues to which the datagrams are to be distributed until the datagrams to be distributed may be received by the preset first datagram queues.

Furthermore, after acquiring, by the packet sending thread, the processed datagrams from the preset second datagram queues corresponding to the plurality of processing threads successively in the preset order, the method further includes: adding address of a memory space occupied by the processed datagrams to a preset queue; acquiring the address of the memory space for storing new datagrams from the preset queue after the packet receiving thread receives the new datagrams. In this way, when receiving the datagrams, the packet receiving thread preferentially acquires the memory space from the preset queue for storing the received datagrams, thus reducing the operation that the packet receiving thread needs to apply for memory space every time it receives the datagrams, and improving the efficiency of the receiving thread.

Furthermore, both the preset first datagram queues and the preset second datagram queues are lock-free queues. Compared with the queues using lock, by using the lock-free queues, there is no need to carry out the locking and unlocking operations, thus improving the efficiency of datagram transmission.

Furthermore, after acquiring, by the packet sending thread, the processed datagrams from the plurality of processing threads successively in the preset order, the method further includes: judging whether the processed datagrams are abnormal datagrams; forwarding the processed datagrams when the processed datagrams are not abnormal datagrams; discarding the processed datagrams when the processed datagrams are abnormal datagrams. In this way, the abnormal datagrams can be eliminated, thus avoiding forwarding the unprocessed datagrams.

Furthermore, the packet receiving thread, the plurality of processing threads, and the packet sending thread are bound as a group of working threads, and the group of working threads are bound with user channels. Before receiving, by the packet receiving thread, datagrams, the method further includes determining the user channels corresponding to the datagrams, and determining the group of working threads bound with the user channels based on the determined user channels; receiving, by the packet receiving thread, datagrams includes: receiving, by the packet receiving thread in the group of working threads, the datagrams, the working threads being bound with the user channels corresponding to the datagrams. In this way, it may ensure that the traffic of an individual user may only be processed by one group of working threads, and thus ensure that disorder of the user traffic will not occur in multiple groups of working threads.

### BRIEF DESCRIPTION OF THE DRAWINGS

One or more embodiments and the corresponding figures in the drawings are used for exemplary descriptions. These exemplary descriptions do not constitute a limitation of the embodiments. The elements with the same reference numerals in the drawings are represented as similar elements. Unless otherwise stated, the figures in the drawings do not constitute a scale limitation.
FIG. 1 shows a flowchart of a datagram processing method in the first embodiment of the present disclosure;
FIG. 2 shows a schematic diagram of datagram transmission among a packet receiving thread, a plurality of processing threads, and a packet sending thread in the first embodiment of the present disclosure;
FIG. 3 shows a flowchart of a datagram processing method in the second embodiment of the present disclosure;
FIG. 4 shows a schematic diagram of a working thread group connected and bound with users in the second embodiment of the present disclosure;
FIG. 5 shows a structural schematic diagram of a datagram processing unit in the third embodiment of the present disclosure;
FIG. 6 shows a structural schematic diagram of a VPN server in the fourth embodiment of the present disclosure;

### DETAILED DESCRIPTION

To clarify the purposes, technical solutions and advantages in the embodiments of the present disclosure, all embodiments of the present disclosure will be described in detail with reference to the drawings. However, those of ordinary skill in the art may understand that many technical details have been put forward in all embodiments of the present disclosure so that readers can understand the present disclosure better. However, the technical solutions claimed in the present disclosure can be realized without including these technical details and various modifications and variations based on the following embodiments.

The following embodiments are divided for the convenience of description and shall not constitute any limitation on specific implementation modes of the present disclosure. Each embodiment may be combined and referred to each other on the premise of no contradiction.

The first embodiment of the present disclosure involves a datagram processing method applied to a VPN server. The VPN server includes a packet receiving thread, a plurality of processing threads and a packet sending thread. The method includes: the packet receiving thread receives datagrams and distributes the datagrams to the plurality of processing threads successively in a preset order; the plurality of processing threads carry out parallel processing on the datagrams after receiving the datagrams; the packet sending thread acquires the processed datagrams from the plurality of processing threads successively in the preset order. In this way, the efficiency of datagram transmission may be improved on basis of ensuring the datagram transmission sequence. The implementation details of a datagram processing method in the embodiments are described in detail below, and the following content is just for the convenience of understanding the implementation details of the solution and not necessarily for the implementation of the solution.

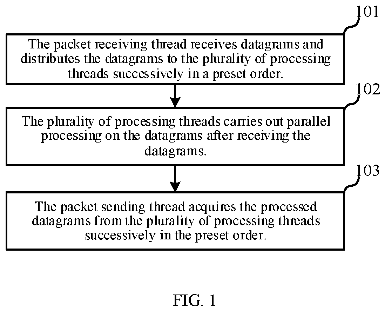

FIG. 1 shows a specific flow of the first embodiment which involves a datagram processing method, and the method includes:
In step 101, the packet receiving thread receives datagrams and distributes the datagrams to the plurality of processing threads successively in a preset order.

The packet receiving thread receives the datagrams forwarded by the kernel mode protocol stack. The datagrams received by the packet receiving thread may be the datagrams sent by the internal network or the datagrams sent by the external network. There is no restriction on the flow direction of the datagrams here. After receiving the datagrams, the packet receiving thread distributes the datagrams to the plurality of processing threads successively in the preset order. For example, the preset order is processing thread 1 and then processing thread 2. After receiving the datagrams, the packet receiving thread distributes the first datagram to the processing thread 1 and the second datagram to the processing thread 2, and then distributes the third datagram to the processing thread 1 again and the fourth datagram to the processing thread 2 again, and so forth. The above-mentioned description is based on two processing threads. In practical application, the number of processing threads is set according to the requirements, and the way to distribute datagrams is also based on the preset order. No more examples will be given for description to avoid repetition.

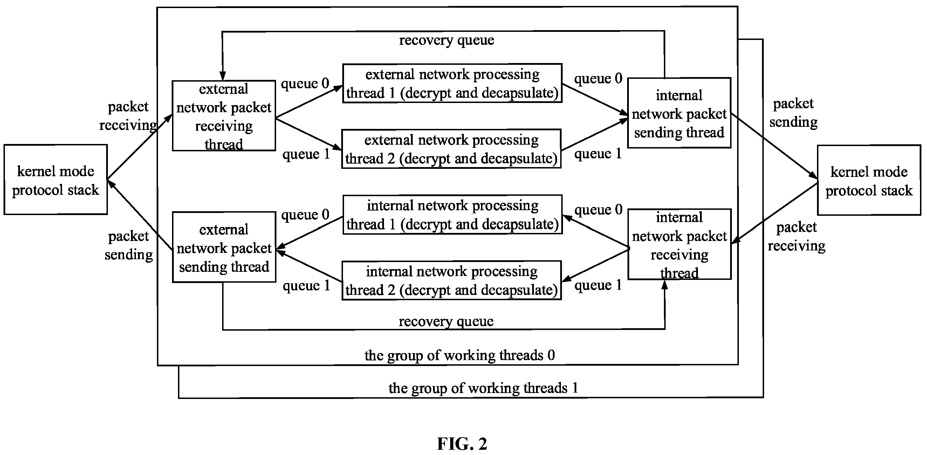

Furthermore, the first datagram queues may be established between the packet receiving thread and the processing threads. As shown in FIG.2, a queue 0 is established between the packet receiving thread and the processing thread 1, and a queue 1 is established between the packet receiving thread and the processing thread 2. The queue 0 and the queue 1 are configured to temporarily store the datagrams distributed by the packet receiving thread. After receiving the datagrams, the packet receiving thread distributes the datagrams to the preset first datagram queues corresponding to the plurality of processing threads in the preset order. Taking the first datagram queues established as shown in FIG.2 as an example, after receiving the datagrams, the packet receiving thread distributes the first datagram to the queue 0 corresponding to the processing thread 1 and the second datagram to the queue 1 corresponding to the processing thread 2, and then distributes the third datagram to the queue 0 corresponding to the processing thread 1 again, and the fourth datagram to the queue 1 corresponding to the processing thread 2 again, and so forth. The above-mentioned description is based on two processing threads. In practical application, the number of processing threads is set according to the requirements, and the number of the first datagram queues established is the same as the number of processing threads. Here, there is no restriction on the number of processing threads and the number of the first datagram queues established.

Furthermore, before the packet receiving thread distributes the datagrams to the preset first datagram queues corresponding to the plurality of processing threads successively in the preset order, it is judged whether the number of datagrams in the preset first datagram queues to which the datagrams are to be distributed by the packet receiving thread reaches the maximum storage number of the preset first datagram queues. For example, the maximum datagram storage number in queue 0 established between the packet receiving thread and the processing thread 1 is 6; before the packet receiving thread distributes datagrams to the queue 0 corresponding to the processing thread 1, it is necessary to judge whether the current number of datagrams in the queue 0 reaches its maximum storage number. If the current number reaches the maximum number of 6, the queue 0 will not store new datagrams any more. If the number of datagrams in the preset first datagram queues to which the datagrams are to be distributed by the packet receiving thread does not reach the maximum storage number, the datagrams may be distributed to the queue. If the number of datagrams in the preset first datagram queues to which the datagrams are to be distributed by the packet receiving thread reaches the maximum storage number, the datagrams to be distributed will fail to be enqueued, and the packet receiving thread may discard the datagrams to be distributed at this time and re-receive new datagrams for distribution. The new datagrams will be distributed to the preset first datagram queues to which the discard massages fail to be enqueued, thereby ensuring that the packet receiving thread distributes the datagrams to the processing threads in the preset order. The following is an example of how the packet receiving thread discards and re-receives new datagrams. It is assumed that the packet receiving thread intends to distribute the fifth datagram to the queue 0 corresponding to the first processing thread and determines that the number of datagrams in the queue 0 reaches the maximum storage number, then the packet receiving thread discards the fifth datagram, continues to receive the sixth datagram and distributes the sixth datagram to the queue 0 as well; if the number of datagrams in the queue 0 remains reaching the maximum storage number, the packet receiving thread continues to discard the sixth datagram and re-receive the seventh datagram until the number of datagrams in the queue 0 is less than the maximum storage number, and distributes the current datagram to the queue 0; after the successful enqueueing of the datagram distributed to the queue 0, the next datagram will be distributed to the queue 1 corresponding to the processing thread 2. Furthermore, if it is determined that the number of datagrams in the preset first datagram queues to which the datagrams are to be distributed by the packet receiving thread reaches the maximum storage number, another option is neither discard nor distribute the datagrams. The packet receiving thread has to wait until the number of datagrams in the preset first datagram queues to which the datagrams are to be distributed by the packet receiving thread is less than the maximum storage number, and then distributes the datagrams to the preset first datagram queues, thereby ensuring that the datagrams are distributed by the packet receiving thread to the processing threads in order.

In practical application, the packet receiving thread may mark the queue id on the received datagrams at the same time of receiving the datagrams, so as to indicate the queues to which the datagrams should be distributed, so that it is convenient to check the distribution sequence of the datagrams in the future, thus avoiding the problem of datagram disorder caused by the errors in the distribution process of the packet receiving thread.

In step 102, the plurality of processing threads carry out parallel processing on the datagrams after receiving the datagrams.

Specifically, when receiving the datagrams transmitted from an external network to an internal network, the processing threads decrypt and decapsulate the datagrams; when receiving the datagrams transmitted from an internal network to an external network, the processing threads encrypt and encapsulate the datagrams.

In step 103, the packet sending thread acquires the processed datagrams from the plurality of processing threads successively in the preset order.

Specifically, the packet sending thread acquires the datagrams processed by the processing threads from the plurality of processing threads successively in the same preset order as the packet receiving thread distributing the datagrams to the processing threads. For example, in the case that the packet receiving thread distributes the datagrams in the preset order of processing thread 1 and then processing thread 2, when the packet sending thread acquires the processed datagrams from the processing threads, the packet sending thread acquires the datagrams from the processing thread 1 for the first time, the datagrams from the processing thread 2 for the second time, the datagrams from the processing thread 1 for the third time, the datagrams from the processing thread 2 for the fourth time, and so forth. After acquiring a complete packet of datagrams, the packet sending thread forwards the acquired processed datagrams to the kernel mode protocol stack. The datagrams will be forwarded through the kernel mode protocol stack. Accordingly, it is ensured that the sequence of the processed datagrams is the same as the distribution sequence of the packet receiving thread, and thus that the datagrams are in order.

Furthermore, the second datagram queues may be established between the processing threads and the packet sending thread. As shown in FIG.2, a queue 0 is established between the processing thread 1 and the packet sending thread, and a queue 1 is established between the processing thread 2 and the packet sending thread. The queue 0 and the queue 1 are configured to temporarily store the processed datagrams. After the processing thread 1 processes the datagrams, the processing thread 1 enqueues the processed datagrams into the queue 0. Similarly, after the processing thread 2 processes datagrams, the processing thread 2 enqueues the processed datagrams into the queue 1. In the process of putting the processed datagrams into a queue of the second queues, if the number of processed datagrams in the queue reaches the maximum number, the processing thread needs to wait until the number of processed datagrams in the queue is less than the maximum number, and then puts the processed datagrams into the queue. When the packet sending thread acquires the processed datagrams from the plurality of processing threads successively in the preset order, it particularly acquires the processed datagrams from the second datagram queues corresponding to the plurality of processing threads. Taking the second datagram queues established in FIG.2 as an example, the packet sending thread acquires the processed datagrams from the queue 0 corresponding to the processing thread 1 for the first time, from the queue 1 corresponding to the processing thread 2 for the second time, from the queue 0 corresponding to the processing thread 1 for the third time, from the queue 1 corresponding to the processing thread 2 for the fourth time, and so forth. After acquiring a complete packet of datagrams, the packet sending thread forwards the acquired processed datagrams to the kernel mode protocol stack.

Furthermore, after the packet sending thread acquires the processed datagrams from the plurality of processing threads successively in the preset order, the packet sending thread may further judge whether the processed datagrams are abnormal datagrams; when they are not abnormal datagrams, the processed datagrams are forwarded; when they are abnormal datagrams, the processed datagrams are discarded. In the cases that datagrams are transmitted from an external network to an internal network, an abnormal datagram may be a datagram that has not been decrypted and decapsulated. In the cases that datagrams are transmitted from an internal network to an external network, an abnormal datagram may be a datagram that has not been encrypted and encapsulated. In this way, the abnormal datagrams can be eliminated, thus avoiding forwarding the unprocessed datagrams.

Compared with the existing technology, embodiments of the present disclosure provide a VPN server including a packet receiving thread, a plurality of processing threads and a packet sending thread. The packet receiving thread in the server receives datagrams and distributes the datagrams to the plurality of processing threads successively in the preset order; after the processing thread processes the received datagrams, the packet sending thread acquires the processed datagrams from the plurality of processing threads in the same preset order, thus ensuring the sequence of the processed datagrams is consistent with that of the datagrams received by the packet receiving thread and avoiding the problem of datagram disorder. Furthermore, when receiving the datagrams, the plurality of processing threads may carry out parallel processing on the received datagrams, thus improving the datagram processing efficiency, shortening the datagram processing time, and enhancing the efficiency of datagram transmission.

The second embodiment of the present disclosure involves a datagram processing method. The second embodiment of the present disclosure further includes: after the packet sending thread acquires the processed datagrams from the preset second datagram queues corresponding to the plurality of processing threads successively in the preset order, the memory space occupied by the processed datagrams is added to a preset queue; after receiving new datagrams, the packet receiving thread acquires the memory space for storing the new datagrams in the preset queue.

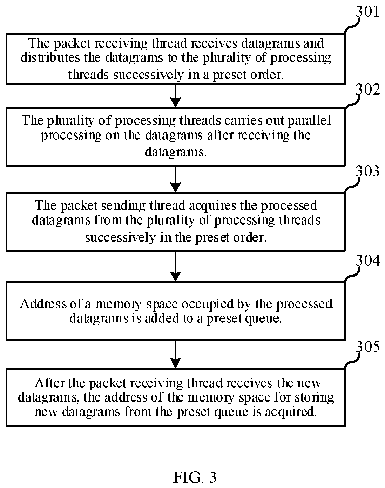

FIG. 3 shows a specific flow of the second embodiment which involves a datagram processing method, and the method includes:
In step 301, the packet receiving thread receives datagrams and distributes the datagrams to the plurality of processing threads successively in the preset order;
In step 302, the plurality of processing threads carry out parallel processing on the datagrams after receiving the datagrams;
In step 303, the packet sending thread acquires the processed datagrams from the plurality of processing threads successively in the preset order;
Steps 301 to 303 correspond to steps 101 to 103 in the first embodiment respectively, which will not be repeated here;
In step 304, the address of the memory space occupied by the processed datagrams is added to the preset queue;
In step 305, after receiving new datagrams, the packet receiving thread acquires the address of the memory space from the preset queue for storing the new datagrams.

Specifically, when receiving datagrams, the packet receiving thread allocates a memory space to the received datagrams for storing the datagrams. The memory space and the stored datagrams are enqueued to the first datagram queues together, and then enter the processing thread witch subsequently processes the datagrams. The memory space is further configured to store the datagrams that has been processed, and is enqueued together with the processed datagrams to the second datagram queues. It is not until the packet sending thread acquires and then forwards the processed datagrams that the memory space is in idle state and provides storage space for other datagrams. After the packet sending thread forwards the processed datagrams, the memory space to be recycled corresponding to the forwarded datagrams is added to the preset queue. The preset queue is established as a recovery queue shown in FIG. 2. The preset queue (recovery queue) is established between the packet sending thread and the packet receiving thread. The preset queue stores the data structure including the address and size of the above memory space to be recycled, and realizes adding memory space in the preset queue. After receiving new datagrams, the packet receiving thread preferentially acquires the data structure from the preset queue, call the address and size of the corresponding memory space based on the acquired data structure, and store the newly received datagram in the memory space. If there is no memory space in the preset queue, the packet receiving thread may request a new memory space for storing the datagrams. In that case, the memory request operation of the packet receiving thread may be reduced and the datagram receiving efficiency of the packet receiving thread may be improved.

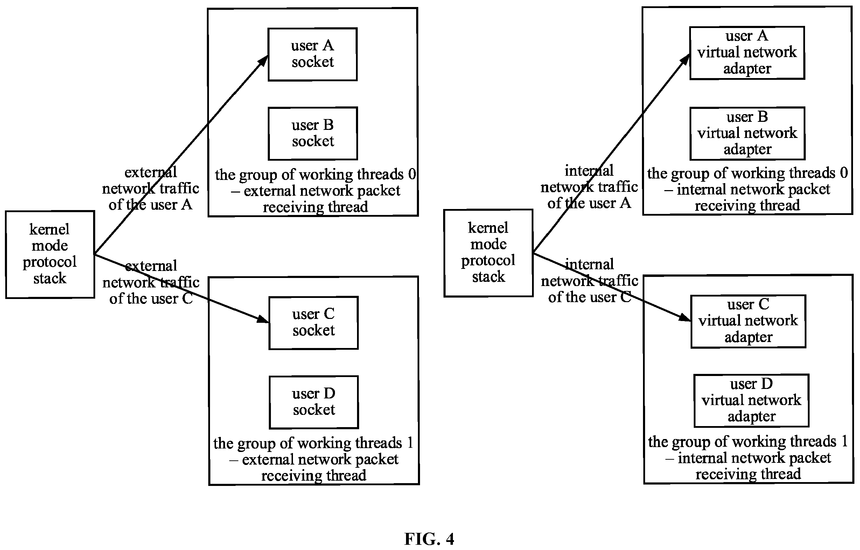

In practical application, the packet receiving thread, the plurality of processing threads, and the packet sending thread may be bound as a group of working threads. There may be a plurality of groups of working threads providing external services, and the traffic of the same user is received by one group of working threads instead of being received by multiple groups of working threads. As shown in FIG. 4, the group of working threads 0 is configured to process the traffic of user A and user B. Once datagrams from user A or user B are received, the datagrams are processed and forwarded through the group of working threads 0. Similarly, the group of working threads 1 may receive the traffic of user C and user D, and datagrams from user C and user D are processed and forwarded through the group of working threads 1. In this way, the traffic parallel processing ability of multi-user VPN is improved and the system processing bandwidth is enhanced. The traffic of user A and user B is only received by the group of working threads 0 and not by the group of working threads 1, ensuring that disorder of the user traffic will not occur in multiple groups of working threads. Furthermore, the first datagram queues, the second datagram queues and the preset queue (recovery queue) in the above description may all be lock-free queues. When datagrams are transmitted through the independent and lock-free queues, the efficiency of datagram transmission in groups of working threads may be further improved.

In the embodiment, after the packet sending thread acquires the processed datagrams from the preset second datagram queues corresponding to the plurality of processing threads successively in the preset order, the memory space occupied by the processed datagrams is added to the preset queue; after receiving new datagrams, the packet receiving thread acquires the memory space from the preset queue for storing the new datagrams, thus reducing the memory request operation of the packet receiving thread and improving the datagram receiving efficiency of the packet receiving thread.

The step division of the above various methods is just for clear description. During implementation, they can be combined into one step or some steps can be divided into several steps. As long as they include the same logical relationship, they are all included in the protection scope of this patent. Adding insignificant modifications to an algorithm or a process or introducing insignificant designs without altering the core design of the algorithm and process are within the protection of the patent.

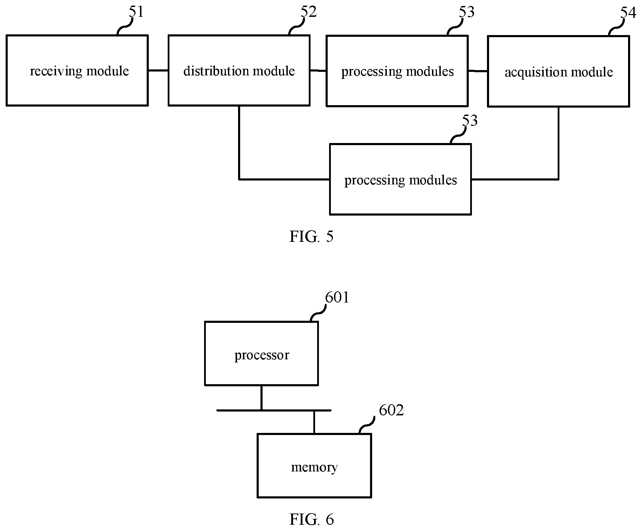

The third embodiment of the present disclosure involves a datagram processing unit, as shown in FIG.5, including: a receiving module 51, a distribution module 52, a plurality of processing modules 53, an acquisition module 54. The receiving module 51 is configured to receive datagrams. The distribution module 52 is configured to distribute the datagrams to the plurality of processing modules 53 successively in a preset order. The plurality of processing modules 53 are configured to carry out parallel processing on the datagrams after receiving the datagrams. The acquisition module 54 is configured to acquire the processed datagrams from the plurality of processing modules 53 in the preset order.

It is not difficult to find that the embodiment involves a system corresponding to the method of the first embodiment, and may be implemented in cooperation with the method of the first embodiment. Relevant technical details mentioned in the first embodiment are still valid in this embodiment, and will be no more described here for avoiding repetition. Accordingly, the relevant technical details mentioned in the present embodiment may also be applicable to the first embodiment.

Furthermore, the datagram processing unit also includes a plurality of first memory modules and a plurality of second memory modules. The distribution module 52 is configured to distribute datagrams to the first memory modules corresponding to the plurality of processing modules successively in the preset order. The plurality of processing modules 53 is configured to acquire datagrams from the corresponding first memory modules respectively and carry out parallel processing on the datagrams, and store the processed datagrams in the corresponding second memory modules respectively. The acquisition module 54 is configured to acquire the processed datagrams from the second memory modules corresponding to the plurality of processing modules successively in the preset order.

Furthermore, the distribution module 52 is specifically configured to distribute datagrams to the first storage modules corresponding to the plurality of processing modules successively in the preset order after determining that the number of datagrams in the first storage modules to be distributed does not reach the maximum storage number.

Furthermore, the datagram processing unit also includes a third storage module. The third storage module is configured to store the memory space occupied by the processed datagrams after the processed datagrams are forwarded; and to provide the distribution module 52 with the memory space for storing the datagrams when receiving an request for the memory space.

Furthermore, the acquisition module 54 is configured to judge whether the processed datagrams are abnormal datagrams; to forward the processed datagrams if they are not abnormal datagrams; and to discard the processed datagrams if they are abnormal datagrams.

It is worth mentioning that each module involved in this embodiment is a logic module. In practical application, a logic unit may be a physical unit, or a part of a physical unit, or a combination of a plurality of physical units. Besides, to highlight the innovative part of the present disclosure, this embodiment does not introduce units not closely related to solving the technical problems put forward in the present disclosure, but it does not indicate that there are no other units in the embodiment.

The fourth embodiment of the present disclosure involves a VPN server, including a plurality of the aforementioned datagram processing units.

The fifth embodiment of the present disclosure involves a VPN server, as shown in FIG. 6, including at least one processor 601; and a memory 602 in communication with the at least one processor 601. The memory 602 stores instructions that may be executed by the at least one processor 601, and the instructions are executed by the at least one processor 601 to enable the at least one processor 601 to perform the above datagram processing method.

Among them, the memory 602 and processor 601 are connected by bus. Buses may include any number of interconnected buses and bridges. Buses connect the various circuits of one or more processors 601 and the memory 602. Buses may also connect various other circuits such as peripherals, regulators, power management circuits, which are well known in this field and will not be further described. Bus interfaces provide interfaces between the buses and a transceiver. The transceiver may be one component, or multiple components, such as a plurality of receivers and transmitters, which provide units for communicating with a variety of other devices in transmission media. The data processed by the processor is transmitted over the wireless media via an antenna. Further, the antenna receives data and transmits the data to the processor 601.

The processor 601 is configured to manage the buses and general processing, and may also provide various functions, including timing, peripheral interface, voltage regulation, power management and other control functions. The memory 602 may be configured to store data used by the storage processor 601 when the storage processor 601 performs operations.

The sixth embodiment of the present disclosure involves a computer-readable storage medium that stores a computer program. When the computer program is executed by the processor, the above method embodiment is performed.

Those skilled in the art can appreciate that all or part of the steps to implement the methods of the above embodiments can be carried out by instructing related hardware through a program. The program is stored in a storage medium, including several instructions that enable a device (a single-chip computer, a chip, etc.) or a processor to implement all or part of steps of the methods in the embodiments of the present disclosure. The above-mentioned storage medium includes various media that may store program codes, such as USB flash drive, mobile hard drive, Read-Only Memory (ROM), Random Access Memory (RAM), disk or compact disc.

Those skilled in the art may appreciate that the aforementioned embodiments are specific embodiments for implementing the present disclosure. In practical application, however, various changes can be made in the forms and details of the specific embodiments without departing from the spirit and scope of the present disclosure.

## Claims

1. • A datagram processing method, being applicable to a VPN server, comprising a packet receiving thread, a plurality of processing threads and a packet sending thread, the method comprising:
receiving, by the packet receiving thread, datagrams; and distributing, by the packet receiving thread, the datagrams to the plurality of processing threads successively in a preset order;
carrying out, by the plurality of processing threads, parallel processing on the datagrams after receiving the datagrams;
acquiring, by the packet sending thread, the processed datagrams from the plurality of processing threads successively in the preset order.

2. • The datagram processing method of claim 1, wherein distributing, by the packet receiving thread, the datagrams to the plurality of processing threads successively in a preset order comprises:
distributing, by the packet receiving thread, the datagrams to preset first datagram queues corresponding to the plurality of processing threads successively in the preset order;
and wherein carrying out, by the plurality of processing threads, parallel processing on the datagrams after receiving the datagrams comprises:
acquiring, by the plurality of processing threads, datagrams from the corresponding preset first datagram queues, respectively, and carrying out, by the plurality of processing threads, parallel processing on the datagrams, and storing, by the plurality of processing threads, the processed datagrams in the corresponding preset second datagram queues, respectively;
and wherein acquiring, by the packet sending thread, the processed datagrams from the plurality of processing threads successively in the preset order comprises:
acquiring, by the packet sending thread, the processed datagrams from the preset second datagram queues corresponding to the plurality of processing threads successively in the preset order.

3. • The datagram processing method of claim 2, wherein before distributing, by the packet receiving thread, the datagrams to the preset first datagram queues corresponding to the plurality of processing threads successively in the preset order, the method further comprises:
determining that the number of datagrams in the preset first datagram queues to which the datagrams are to be distributed by the packet receiving thread does not reach the maximum storage number of the preset first datagram queues.

4. • The datagram processing method of claim 2, wherein after acquiring, by the packet sending thread, the processed datagrams from the preset second datagram queues corresponding to the plurality of processing threads successively in the preset order, the method further comprises:
adding address of a memory space occupied by the processed datagrams to a preset queue;
acquiring the address of the memory space for storing new datagrams from the preset queue after the packet receiving thread receives the new datagrams.

5. • The datagram processing method of any one of claims 2 to 4, wherein both the preset first datagram queues and the preset second datagram queues are lock-free queues.

6. • The datagram processing method of claim 1, wherein after acquiring, by the packet sending thread, the processed datagrams from the plurality of processing threads successively in the preset order, the method further comprises:
judging whether the processed datagrams are abnormal datagrams;
forwarding the processed datagrams when the processed datagrams are not abnormal datagrams;
discarding the processed datagrams when the processed datagrams are abnormal datagrams.

7. • The datagram processing method of claim 1, wherein
the packet receiving thread, the plurality of processing threads, and the packet sending thread are bound as a group of working threads, and the group of working threads is bound with user channels; be
fore receiving, by the packet receiving thread, datagrams, the method further comprises:
determining the user channels corresponding to the datagrams, and determining the group of working threads bound with the user channels based on the determined user channels;
wherein receiving, by the packet receiving thread, datagrams comprises:
receiving, by the packet receiving thread in the group of working threads, the datagrams, the working threads being bound with the user channels corresponding to the datagrams.

8. • A datagram processing unit, comprising:
a receiving module configured to receive datagrams;
a distribution module configured to distribute datagrams to the plurality of processing modules successively in a preset order;
a plurality of processing modules configured to carry out parallel processing on the datagrams after receiving the datagrams; and
an acquisition module configured to acquire the processed datagrams from the plurality of processing modules successively in the preset order.

9. • A VPN server, comprising: a plurality of the datagram processing units of claim 8.

10. • A VPN server, comprising:
at least one processor; and
a memory in communication with the at least one processor; wherein
the memory stores instructions executable by the at least one processor, and the instructions, when executed by the at least one processor, cause the at least one processor to implement the datagram processing method of any one of claims 1 to 7.

11. • A computer-readable storage medium that stores a computer program, when executed by a processor, causing the processor to implement the datagram processing method of any one of claims 1 to 7.
